# EUROPEAN PATENT APPLICATION

(11) **EP 4 841 716 A1**
(43) Date of publication of application: **18.11.2026**
(21) Application number: 25738797.7
(22) Date of filing: 09.01.2025
(51) Int. Cl.: H01M 4/62, H01M 4/13, H01M 4/139, H01M 4/525

(54) **BINDER FOR SECONDARY BATTERY, ELECTRODE MIXTURE, ELECTRODE, AND NON-AQUEOUS ELECTROLYTE SECONDARY BATTERY**

(30) Priority: 11.01.2024 JP 2024002573
(71) Applicant: Kureha Corporation, Chuo-ku Tokyo 103-8552 (JP)
(72) Inventor: YAGI, Toshiki, Tokyo 103-8552 (JP); NAGAOKA, Keita, Tokyo 103-8552 (JP); OKADA, Kayoko, Tokyo 103-8552 (JP); WATANABE, Keisuke, Tokyo 103-8552 (JP)
(74) Representative: Zimmermann & Partner Patentanwälte mbB
(86) International application number: PCT/JP2025/000458
(87) International publication number: WO 2025/150529

(57) **Abstract**

Provided is a binder for a secondary battery. The binder for a secondary battery contains a vinylidene fluoride polymer having structural units derived from vinylidene fluoride and structural units derived from a sulfonyl group-containing compound. In the vinylidene fluoride polymer, the content of the structural units derived from a sulfonyl group-containing compound is 0.15 mol% or greater and 1 mol% or less relative to the structural units derived from vinylidene fluoride.

## Description

### TECHNICAL FIELD

The present invention relates to a binder for a secondary battery, an electrode mixture, an electrode, and a non-aqueous electrolyte secondary battery.

### BACKGROUND ART

As batteries having high energy density, non-aqueous electrolyte secondary batteries such as lithium-ion secondary batteries are widely used.

An electrode of a lithium-ion secondary battery is usually produced by coating a current collector with an electrode mixture in a slurry form in which an active material, a conductive additive, and a binder are dispersed in a solvent and then drying the electrode mixture. A binder containing a vinylidene fluoride polymer is used as the binder of the positive electrode.

For example, Patent Document 1 discloses, as an ion-conductive material for use in a lithium battery or the like, a vinylidene fluoride polymer containing structural units derived from a vinylidene fluoride monomer and structural units derived from CF₂=CF(CF₂CF₂)nSO₂.

In addition, Patent Document 2 discloses a binder containing a vinylidene fluoride polymer in which a hydrogen atom in structural units derived from vinylidene fluoride is substituted with a sulfonic acid group (-SO₃H group).

### CITATION LIST

### PATENT DOCUMENT

Patent Document 1: JP 2002-528433 T
Patent Document 2: JP H10-298386 A

### SUMMARY OF INVENTION

### TECHNICAL PROBLEM

As a positive electrode active material of a lithium secondary battery, a cobalt-based positive electrode active material is primarily used, but from the viewpoint of further increasing the capacity, a high-capacity active material such as a high-nickel-based positive electrode active material containing a large amount of nickel may be used. However, a slurry that contains this type of high-capacity active material and a binder containing a known vinylidene fluoride polymer is problematic in that in the process of manufacturing an electrode, the viscosity is likely to increase (gelling) over time, and the coatability is likely to decrease.

In view thereof, the present inventors attempted to suppress this thickening of the slurry by changing details such as the type of the copolymerizable monomer of the vinylidene fluoride polymer serving as the binder. As a result, it became clear that even if the thickening of the slurry can be suppressed, the adhesiveness of the electrode mixture layer to the current collector may be reduced. Therefore, a demand exists for a binder that can suppress thickening of the slurry while maintaining the adhesiveness to the current collector.

Thus, an object of the present invention is to provide a secondary battery binder that can suppress thickening of the slurry while maintaining adhesiveness with the current collector, and to also provide an electrode mixture, an electrode, and a non-aqueous electrolyte secondary battery.

### SOLUTION TO PROBLEM

[1] A binder for a secondary battery, the binder containing a vinylidene fluoride polymer including structural units derived from vinylidene fluoride and structural units derived from a sulfonyl group-containing compound, wherein in the vinylidene fluoride polymer, the content of the structural units derived from a sulfonyl group-containing compound is 0.15 mol% or greater and 1 mol% or less relative to the structural units derived from vinylidene fluoride.
[2] The binder for a secondary battery according to [1], wherein the sulfonyl group-containing compound is a compound represented by the following Formula (1). 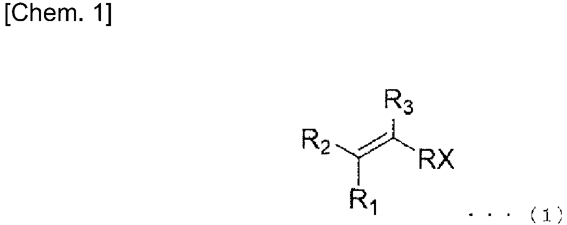 (In Formula (1),
   R₁, R₂, and R₃ each independently represent a hydrogen atom, a chlorine atom, a fluorine atom, an alkyl group having from 1 to 6 carbon atoms, or a fluorine-substituted alkyl group having from 1 to 6 carbon atoms,
   RX is an atomic group containing -SO₂-Ra or an atomic group containing -SO₂-F, and
   Ra is an atomic group containing at least one carbon atom.)
[3] The binder for a secondary battery according to [1] or [2], wherein the sulfonyl group-containing compound further includes an ester bond.
[4] The binder for a secondary battery according to any of [1] to [3], wherein the sulfonyl group-containing compound is a compound represented by the following Formula (2). 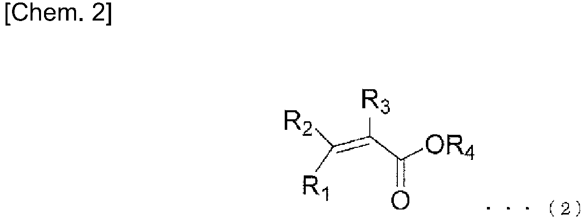 (In Formula (2),
   R₁, R₂, and R₃ each independently represent a hydrogen atom, a chlorine atom, a fluorine atom, an alkyl group having from 1 to 6 carbon atoms, or a fluorine-substituted alkyl group having from 1 to 6 carbon atoms,
   R₄ is an atomic group containing -SO₂-Ra or -SO₂-F, and Ra is an atomic group containing at least one carbon atom.)
[5] The binder for a secondary battery according to [4], wherein R₄ is a group containing -(CH₂)n-SO₂-Ra, Ra is an alkyl group, the alkyl group and a carbon atom of -(CH₂)n- are optionally bonded to form a ring, and n is an integer of 1 or greater.
[6] The binder for a secondary battery according to any of [1] to [5], wherein, when a slurry is prepared under the following conditions, a viscosity ratio of the slurry measured under the following conditions is 150% or less.
   1) Mix the binder for a secondary battery with Li_{1.00}Ni_{0.80}Co_{0.15}Al_{0.05}O₂ (mean particle size: 13 µm, specific surface area: 0.2 m²/g, pH: 11.5) as an active material, carbon black (mean particle size: 40 nm, specific surface area: 60 m²/g), and N-methyl-2-pyrrolidone having a water content of 300 ppm by mass or less to prepare a slurry having a mass ratio of the active material, the carbon black, and the vinylidene fluoride polymer of 100:1.5:1.5 and a solids content concentration of 75 mass%.
   2) Measure a viscosity of the slurry before storage using an E-type viscometer at 25°C and a shear rate of 2 s⁻¹.
   3) Store the slurry at 25°C under a nitrogen atmosphere for 264 hours.
   4) Measure the viscosity of the slurry after storage using an E-type viscometer at 25°C and a shear rate of 2 s⁻¹.
   5) Calculate a viscosity ratio of the slurry based on the following equation. $Viscosity ratio \left(%\right) = \left(slurry viscosity after storage\right) / \left(\begin{matrix}slurry viscosity before \\ storage\end{matrix}\right) \times 100$ The above-described 1) to 5) are carried out in an environment having a dew point of -30°C or lower.
[7] An electrode mixture, containing an active material, a conductive additive, and the binder for a non-aqueous electrolyte secondary battery described in any of [1] to [6].
[8] The electrode mixture according to [7], wherein the active material is a positive electrode active material.
[9] The electrode mixture according to [8], wherein the positive electrode active material contains a compound represented by the following Formula (3).

   LiMxO₂ ··· (3)

   (In Formula (3), M represents at least one type of metal element including Ni, and when a total of the metal elements represented by M is defined as 100 mol%, the content proportion of Ni is 55 mol% or greater, and 0.5 ≤ x ≤ 1.5 holds true).
[10] An electrode including: a current collector; and an electrode mixture layer retained on the current collector, the electrode mixture layer containing the electrode mixture described in any of [7] to [9].
[11] A non-aqueous electrolyte secondary battery, including the electrode described in [10].

### ADVANTAGEOUS EFFECTS OF INVENTION

According to the present invention, a secondary battery binder that can suppress the thickening of a slurry while maintaining adhesiveness with a current collector, can be provided along with an electrode mixture, an electrode, and a non-aqueous electrolyte secondary battery.

### BRIEF DESCRIPTION OF DRAWINGS

FIG. 1 is a graph indicating changes over time in the viscosity of slurries of Examples 1 to 3 and Comparative Examples 1 to 3.
FIG. 2 is a graph indicating changes over time in the viscosity of slurries of Example 4 and Comparative Examples 4 to 7.

### DESCRIPTION OF EMBODIMENTS

As indicated above, an issue with a slurry that is obtained by mixing a vinylidene fluoride polymer with a high capacity active material, particularly a positive electrode active material containing a large amount of nickel, is that gelling is likely to occur.

The mechanism thereof is considered to be as follows. The positive electrode active material contains a base, and the positive electrode active material having a high nickel ratio contains a particularly large amount of base. Thus, when the vinylidene fluoride polymer comes into contact with the positive electrode active material, deterioration of the polymer is promoted by the base. Specifically, the vinylidene fluoride in the polymer undergoes the removal of hydrofluoric acid, and a conjugated double bond is produced. The vinylidene fluoride polymer with the conjugated double bonds formed therein is likely to be crosslinked in a slurry-like electrode mixture (hereinafter, also referred to as slurry), and the slurry is likely to gel.

With regard to this, the present inventors discovered that a vinylidene fluoride polymer containing structural units derived from a sulfonyl group (-SO₂-)-containing compound at an amount of 0.15 mol% or greater and 1 mol% or less relative to the structural units derived from vinylidene fluoride can effectively suppress gelling without reducing adhesiveness.

The details of this mechanism are not clear, but the mechanism is thought to be as follows.
The sulfonyl groups in the vinylidene fluoride polymer have a relatively high electron density and thus are easily coordinated with the conductive additive or the like in the slurry. In addition, the sulfonyl group-containing compound is easily introduced into even vinylidene fluoride polymers of the low molecular weight range (highly dispersible) among vinylidene fluoride polymers. Therefore, it is thought that the dispersibility of the vinylidene fluoride polymer into which the sulfonyl group-containing compound containing is introduced is enhanced by the above-described coordination ability of the sulfonyl group and the introduction of the sulfonyl group-containing compound into vinylidene fluoride polymers of the low molecular weight range, and as a result, the polymers are less likely to crosslink with each other, and thickening is successfully suppressed.

Moreover, as described above, even when the content of the structural units derived from the sulfonyl group (-SO₂-)-containing compound in the vinylidene fluoride polymer is small, thickening of the slurry can be suppressed, and therefore, the adhesiveness derived from vinylidene fluoride can be further maintained.

That is, the binder according to one embodiment of the present invention contains a vinylidene fluoride polymer that includes structural units derived from vinylidene fluoride and structural units derived from a sulfonyl group-containing compound.

A binder according to an embodiment of the present invention will be described below.

### 1. Binder

The binder according to the present embodiment contains a vinylidene fluoride polymer.

### 1-1. Vinylidene Fluoride Polymer

The vinylidene fluoride polymer contains structural units derived from vinylidene fluoride and structural units derived from a sulfonyl group-containing compound.

The content of the structural units derived from the sulfonyl group-containing compound is 0.15 mol% or greater and 1.0 mol% or less in relation to the structural units derived from vinylidene fluoride. When the above-described content is 0.15 mol% or greater, thickening of the electrode mixture can be further suppressed without reducing the adhesiveness. When the above-described content is 1.0 mol% or less, not only is synthesis facilitated, but a decrease in adhesiveness can also be made less likely to occur. From the same viewpoint, the content of the structural units derived from the sulfonyl group-containing compound is preferably 0.2 mol% or greater and 0.5 mol% or less, and more preferably 0.25 mol% or greater and 0.4 mol% or less.

In addition, from the same viewpoint, the content of the structural units derived from the sulfonyl group-containing compound is preferably 0.5 parts by mass or greater and 2 parts by mass or less, and more preferably 0.7 parts by mass or greater and 1.5 parts by mass or less, per 100 parts by mass of the total amount of the structural units derived from vinylidene fluoride and the structural units derived from the sulfonyl group-containing compound.

The presence of a sulfonyl group in the structural units of the vinylidene fluoride polymer can be confirmed by X-ray photoelectron spectroscopy (XPS) measurements. In particular, XPS measurements are performed under the following conditions, and in the obtained spectrum, peaks attributed to the sulfur of the sulfonyl groups (peaks from around 165 to 170 eV and from around 220 to 240 eV) are observed, and the sulfur is detected by elemental analysis, and thereby it can be confirmed that the structural units of the vinylidene fluoride polymer contains a sulfonyl group.

XPS measurements can be carried out under the following conditions. A binder powder obtained by polymerization is sandwiched between aluminum foils and hot-pressed at 200°C and 10 MPa to obtain a film-shaped sample. The sample is cut into a square measuring 1 cm on each side and fixed to a sample stage for XPS measurements using double-sided carbon tape. An XPS measurement device (for example, the PS9010MC available from JEOL Ltd.) can be used as the measurement device. As a ray source, 30 W (10 kV x 5 mA) Al-Kα rays can be used. The electrons can be replenished with a 2 W (1 kV x 1 mA) neutralization gun, and the measurements can be carried out at a photoelectron detection angle of 90 degrees.

The content of each type of structural units in the vinylidene fluoride polymer can be determined by conducting ¹H-NMR measurements under the following conditions and then calculating the content from an integral ratio of signals in the obtained spectrum.

¹H-NMR measurements can be carried out under the following conditions. An amount of 10 mg of the binder powder obtained by polymerization is added to 0.75 mL of DMSO-d6, and the mixture is heated at 50°C for 3 hours to completely dissolve the binder powder. The solution is then inserted into an NMR sample tube having a diameter of 5 mm, and a sample is thereby prepared. An NMR measurement device (for example, the AVANCE AC 400FT NMR spectrometer, available from Bruker Corp.) can be used as the measurement device.

The sulfonyl group-containing compound is preferably a compound represented by the following Formula (1).

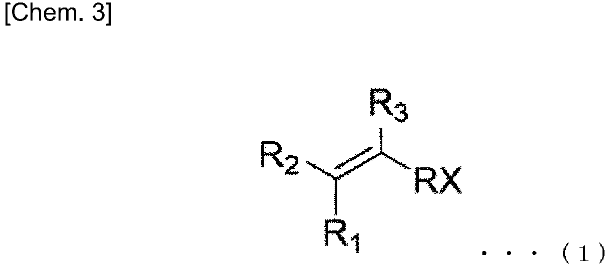

In Formula (1), R₁ to R₃ are each a hydrogen atom, a chlorine atom, a fluorine atom, an alkyl group having from 1 to 6 carbon atoms, or a fluorine-substituted alkyl group having from 1 to 6 carbon atoms. Examples of the alkyl group having from 1 to 6 carbon atoms include a methyl group, and an ethyl group, and a methyl group is preferable. Furthermore, the fluorine-substituted alkyl group having from 1 to 6 carbon atoms is preferably a fluorine-substituted alkyl group having from 1 to 3 carbon atoms, more preferably a fluorine-substituted alkyl group having one carbon, and even more preferably a trifluoromethyl group. Among these, R₁ to R₃ are each preferably a hydrogen atom or an alkyl group have from 1 to 6 carbon atoms, and more preferably a hydrogen atom.

RX in Formula (1) is an atomic group containing a sulfonyl group. The atomic group containing a sulfonyl group may be any of an atomic group containing -SO₂-Ra (with Ra being an atomic group containing at least one carbon atom), an atomic group containing -SO₂-F, or the like, and is preferably an atomic group containing -SO₂-Ra. The reason for this is that the electron-withdrawing property of the group adjacent to the sulfur atom of the sulfonyl group is lower than that of other groups, and therefore -SO₂-Ra tends to further increase the electron density of the sulfonyl moiety and thereby increase the orientation capacity and can better suppress a crosslinking reaction of the polymer. Examples of the atomic group represented by Ra include an alkyl group and an aryl group, and an alkyl group is preferable. These groups may be substituted with a substituent such as a halogen atom, a sulfur atom, a nitrogen atom, or an oxygen atom as long as the effects of the present invention are not impaired. It should be noted that the sulfonyl group does not include a sulfo group (-SO₃H) or a salt thereof.

RX is preferably an atomic group containing -(CR₅R₆)n-SO₂-Ra (where R₅ and R₆ are each a hydrogen atom or a fluorine atom), and more preferably an atomic group containing -(CH₂)n-SO₂-Ra, and may be, for example, -L-(CH₂)n-SO₂-Ra. Here, n is an integer of 1 or greater and may be preferably 1 or 2. Ra and a carbon atom of -(CR₅R₆)n- or -(CH₂)n- may be bonded to each other to form a ring. The ring is preferably a 5-membered or 6-membered aliphatic ring. L is a single bond or a linking group composed of one, or two or more selected from the group consisting of -COO-, -CO-, and -O-. In these cases, the atomic group represented by RX can contain a -C-SO₂-C- bond, and therefore the electron density of the sulfonyl moiety can be more easily increased, and the crosslinking reaction of the polymer can be better suppressed.

The molecular weight of the atomic group represented by RX is preferably 76 or greater and 200 or less, and more preferably 79 or greater and 150 or less. When the molecular weight of the atomic group represented by RX is 200 or less, the compound represented by the Formula (1) is more easily synthesized. In addition, when the molecular weight of the atomic group represented by RX is 76 or greater, an appropriate bulkiness is achieved, and therefore thickening of the slurry can be further suppressed. The molecular weight thereof can be calculated from the chemical structure.

Even among the above, the sulfonyl group-containing compound preferably further contains an ester bond (-COO-).

The presence of an ester bond in the structural units of the vinylidene fluoride polymer can be confirmed by NMR measurements and IR measurements. Specifically, the presence of an ester bond in the structural units of the vinylidene fluoride polymer can be confirmed by observing, in a spectrum obtained by NMR measurements, a signal (esteric -CH₂- (the "-CH₂- " of "(CO)O-CH₂-")) near 5 ppm, and observing, in a spectrum obtained by IR measurements, a peak near 1730 cm⁻¹ (esteric -COO-).

Of the sulfonyl group-containing compounds, the compound having a sulfonyl group and an ester bond is preferably a compound represented by Formula (2) below.

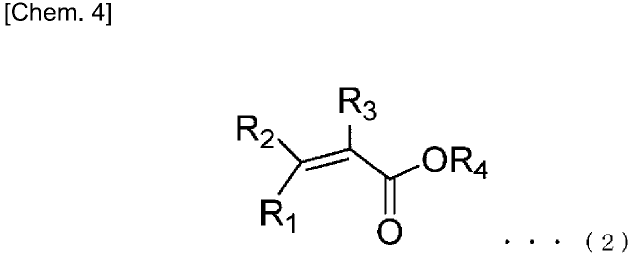

In Formula (2), R₁ to R₃ are the same as R₁ to R₃ in Formula (1).

R₄ in Formula (2) is an atomic group containing -SO₂-Ra or an atomic group containing -SO₂-F, and is preferably a group containing -(CR₅R₆)n-SO₂-Ra, and more preferably a group containing -(CH₂)n-SO₂-Ra. Here, n is an integer of 1 or greater, and is preferably 1, 2, or 3, and is more preferably 1 or 2.
Ra is the same as Ra described above and is preferably an alkyl group. It should be noted that the alkyl group and the carbon atom of -(CH₂)n- may be bonded to each other to form a ring.
R₅ and R₆ are also the same as R₅ and R₆ described above and are each preferably a hydrogen atom.

Specific examples of the sulfonyl group-containing compound include the following compounds.

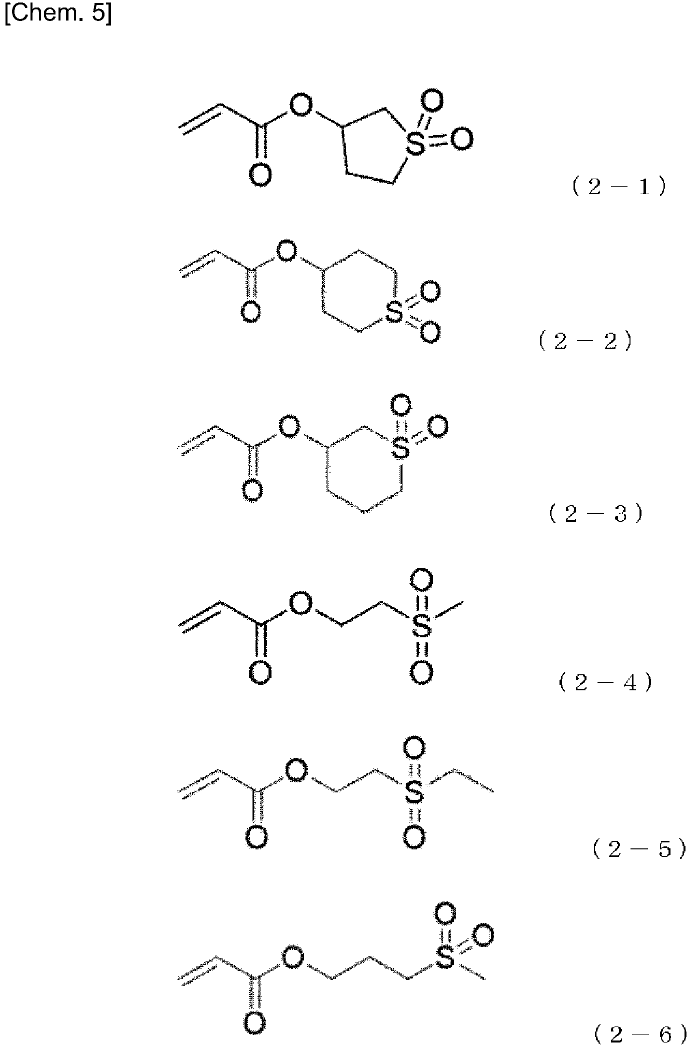

The vinylidene fluoride polymer may further contain structural units derived from compounds other than the vinylidene fluoride and the sulfonyl group-containing compound within a range in which the object and effects of the present invention are not impaired.

The vinylidene fluoride polymer may contain one type of structural unit derived from another compound, or may contain two or more types of structural units derived from other compounds. However, the total amount of the structural units derived from vinylidene fluoride and the structural units derived from a sulfonyl group-containing compound with respect to all the structural units of the vinylidene fluoride polymer is preferably 90 mass% or greater, and more preferably 95 mass% or greater.

Examples of the other compounds include fluorine-based monomers copolymerizable with vinylidene fluoride, hydrocarbon-based monomers such as ethylene and propylene, and monomers copolymerizable with compounds containing a sulfonyl group. Examples of fluorine-based monomers that are copolymerizable with vinylidene fluoride include vinyl fluoride, trifluoroethylene, tetrafluoroethylene, chlorotrifluoroethylene, hexafluoropropylene, fluoroalkyl vinyl ether, and perfluoroalkyl vinyl ethers such as perfluoromethyl vinyl ether. Examples of monomers that are copolymerizable with sulfonyl group-containing compounds include alkyl (meth)acrylate compounds such as methyl(meth)acrylate.

The vinylidene fluoride polymer may be a block polymer or may be a random polymer.

The melting point of the vinylidene fluoride polymer is, for example, preferably 160°C or higher and more preferably 165°C or higher. When the melting point of the vinylidene fluoride polymer is 160°C or higher, swelling is less likely to be caused by an electrolyte, and the performance of the resulting lithium-ion secondary battery tends to be further improved.

The melting point of the vinylidene fluoride polymer can be determined by calorimetry using the differential scanning calorimeter (DSC). Specifically, the vinylidene fluoride polymer is heated from 30°C to 230°C at 10°C/min (the first heating), cooled from 230°C to 30°C at 10°C/min (the first cooling), and further heated from 30°C to 230°C at 10°C/min (the second heating). A melting peak is then identified by DSC. In the present description, the maximum melting peak temperature observed in the second heating is identified as the melting point of the vinylidene fluoride polymer.

The inherent viscosity of the vinylidene fluoride polymer is, for example, preferably 0.5 dL/g or greater and 5.0 dL/g or less, more preferably 1.0 dL/g or greater and 4.0 dL/g or less, and most preferably 1.0 dL/g or greater and 3.5 dL/g or less. When the inherent viscosity is 0.5 dL/g or greater, the adhesive strength between the binder (vinylidene fluoride polymer) and an active material and/or a current collector can be further enhanced. On the other hand, when the inherent viscosity is 5.0 or less and an electrode slurry is prepared, the slurry viscosity does not become excessively high, and better workability is achieved.

The inherent viscosity (ηᵢ) is expressed as a logarithmic viscosity. First, 80 mg of the vinylidene fluoride polymer is dissolved in 20 mL of N,N-dimethylformamide, and then the viscosity is measured by using an Ubbelohde viscometer in a 30°C thermostatic bath. The inherent viscosity is then calculated from the obtained value using the following equation. ${η}_{i} = \left(1/C\right) \cdot ln \left(η/{η}_{0}\right)$ In the equation, η is the viscosity of the solution, η₀ is the viscosity of N,N-dimethylformamide alone, which is a solvent, and C is the concentration of the vinylidene fluoride polymer in the solution, that is, 0.4 g/dL.

The vinylidene fluoride polymer can be prepared, for example, by copolymerizing vinylidene fluoride, a sulfonyl group-containing compound, and, optionally, an additional compound by a known method. Examples of the method for copolymerizing these components include suspension polymerization, emulsion polymerization, and solution polymerization. However, from the viewpoints of ease in obtaining a binder having a high adhesive strength, and reducing impurities, suspension polymerization is preferred.

A compound (2-1), which is one of the sulfonyl group-containing compounds, can be obtained, for example, by reacting 3-hydroxysulfolane and acryloyl chloride in dichloromethane. Moreover, a compound (2-4) can be obtained, for example, by reacting 2-hydroxyethyl methyl sulfone and acryloyl chloride in the presence of dichloromethane.

### 1-2. Non-Aqueous Solvent

The binder may contain a non-aqueous solvent, as necessary. When the binder contains a non-aqueous solvent, the vinylidene fluoride polymer can be dissolved or dispersed, and the binder can be formed in a liquid state.

Examples of the non-aqueous solvent include solvents having polarity (polar solvents). Examples of the polar solvent include amide compounds, such as dimethylformamide, N,N-dimethylacetamide, and N-methylpyrrolidone; alcohols, such as methanol, ethanol, isopropyl alcohol, 2-ethyl-1-hexanol, 1-nonanol, lauryl alcohol, and tripropylene glycol; amine compounds, such as o-toluidine, m-toluidine, and p-toluidine; 1-ethyl -3-methylimidazolium bis(trifluoromethylsulfonyl) imide; lactones, such as γ-butyrolactone and δ-butyrolactone; and sulfoxide-sulfone compounds, such as dimethyl sulfoxide and sulfolane. The binder may contain a single non-aqueous solvent alone or may contain two or more non-aqueous solvents.

The amount of the non-aqueous solvent in the binder is preferably 400 parts by mass or greater and 5000 parts by mass or less, and more preferably 500 parts by mass or greater and 5000 parts by mass or less, per 100 parts by mass of the vinylidene fluoride polymer. When the amount of the non-aqueous solvent in the binder is in the range described above, the vinylidene fluoride polymer can be more uniformly dispersed or dissolved in the non-aqueous solvent.

### 1-3. Other Components

The binder may further contain an additional resin, such as an acrylic resin; a filler, such as an inorganic filler; an additive of various types; and/or the like, in the range that does not impair the object and effect of the present invention.

### 1-4. Physical Properties of Binder

As described above, the binder can suppress thickening when mixed with the active material and a conductive agent to form a slurry. Specifically, when the binder is used to prepare a slurry under the following conditions, the viscosity ratio of the slurry as measured under the following conditions is preferably 150% or less, more preferably 100% or less, and even more preferably 80% or less. The lower limit of the viscosity ratio is not particularly limited, but is preferably 10% or greater from the viewpoint of facilitating the formation of a coating film having a predetermined thickness or greater.
1) Mix the binder with Li_{1.00}Ni_{0.80}Co_{0.15}Al_{0.05}O₂ (mean particle size: 13 µm, specific surface area: 0.2 m²/g, pH: 11.5) as an active material, carbon black (mean particle size: 40 nm, specific surface area: 60 m²/g), and N-methyl-2-pyrrolidone having a water content of 300 ppm by mass or less to prepare a slurry in which the mass ratio of the active material, the carbon black, and the vinylidene fluoride polymer is 100:1.5:1.5, and the solids content concentration is 75 mass%.
2) Measure the viscosity of the slurry before storage using an E-type viscometer at 25°C and a shear rate of 2 s⁻¹.
3) Store the slurry at 25°C under a nitrogen atmosphere for 264 days.
4) Measure the viscosity of the slurry after storage at 25°C and a shear rate of 2 s⁻¹ using an E-type viscometer.
5) Calculate the viscosity ratio of the slurry based on the following equation. $Viscosity ratio \left(%\right) = \left(slurry viscosity after storage\right) / \left(\begin{matrix}slurry viscosity before \\ storage\end{matrix}\right) \times 100$
The above-described 1) to 5) are carried out in an environment having a dew point of -30°C or lower.

The viscosity ratio of the slurry can be adjusted, for example, by adjusting details such as the content of the structural units derived from the sulfonyl group-containing compound in the vinylidene fluoride polymer, and the type of the sulfonyl group-containing compound. When the content of the structural units derived from the sulfonyl group-containing compound is increased, the viscosity ratio tends to be smaller.

### 2. Electrode Mixture

The electrode mixture contains an active material, a conductive additive, and the above-described binder. The electrode mixture can be preferably used as an electrode mixture for a non-aqueous electrolyte secondary battery, which will be described later. The electrode mixture may further contain a conductive additive, a solvent, other additives, and the like.

### 2-1. Active Material

The active material may be a positive electrode active material or a negative electrode active material. Among these, the active material is preferably a positive electrode active material.

The positive electrode active material is not particularly limited but is preferably a lithium metal oxide.

Examples of lithium metal oxides include LiMnO₂, LiMn₂O₄, LiCoO₂, LiNiO₂, LiNiₓCo₁₋ₓO₂ (0 < x < 1), LiNiₓCo_{y}Mn_{1-x-y}O₂ (0 <x <1, 0 < y < 1), LiNiₓCo_{y}Al_{1-x-y}O₂ (0 < x <1, 0 < y < 1), LiMaPO₄ (provided that Ma is one or more elements selected from Co, Ni, Mn, Fe, Mg, Nb, Ti, Al, and Zr), a Li-rich solid solution positive electrode represented by Li₂MnO₃-LiMbO₂A (Mb = Mn, Co, Ni), lithium titanate (Li₄Ti₅O₁₂), titanium oxide (TiO₂), and LiₛNiₜCoᵤAlᵥO₂ (0.9 <s <1.3, 0.9 < t + u + v < 1.1).

From the viewpoint of increasing the capacity density to increase the capacity of the secondary battery, the positive electrode active material is preferably a lithium metal compound containing Ni. In addition, from the viewpoint of suppressing a change in crystal structure in the charging and discharging process and stabilizing the cycle performance, the positive electrode active material is more preferably a lithium metal compound containing Ni and Co.

Examples of the lithium-based positive electrode active material include lithium metal oxides represented by the following Formula (3).

(3): LiMxO₂

In Formula (3), M represents at least one metal element including Ni. The metal element other than Ni is preferably selected from the group consisting of Co, Al, Fe, Mn, Cr, and V. M more preferably further includes, in addition to Ni, one or more metal elements selected from the group consisting of Co, Mn, and Al. Moreover, in the lithium metal oxide represented by Formula (3), when the total of the metal elements included in M is considered to be 100 mol%, Ni is preferably contained at an amount of 55 mol% or greater, and more preferably 70% or greater.

In Formula (3), 0.5 ≤ x ≤ 1.5 is satisfied, and 0.7 ≤ x ≤ 1.3 is more preferably satisfied.

From the viewpoint of increasing the charging potential of the secondary battery and further enhancing the cycle performance, the positive electrode compound is preferably a lithium metal oxide (ternary lithium metal oxide) represented by Formula (4) presented below.

Li₁₋ₐNiₓCO_{y}M_{z}O₂ ··· (4)

In Formula (4), M is Mn or Al, and -0.5 ≤ a ≤ 0.5, 0 < x < 1, 0 < y < 1, 0 < z < 1, and x + y + z = 1 are satisfied.

Examples of the lithium-based positive electrode active material and ternary lithium metal oxide represented by Formula (3) include Li_{1.00}Ni_{0.35}Co_{0.34}Mn_{0.34}O₂ (NCM111), Li_{1.00}Ni_{0.50}Co_{0.20}Mn_{0.30}O₂ (NCM523), Li_{1.00}Ni_{0.50}Co_{0.30}Mn_{0.20}O₂ (NCM532), Li_{1.00}Ni_{0.6}Co_{0.2}Mn_{0.2}O₂ (NCM622), Li_{1.00}Ni_{0.80}Co_{0.10}Mn_{0.10}O₂ (NCM811), and Li_{1.00}Ni_{0.80}Co_{0.15}Al_{0.05}O₂ (NCA811).

Among the positive electrode active materials exemplified above, Li_{1.00}Ni_{0.80}Co_{0.10}Mn_{0.10}O₂ (NCM811) and LiNi_{0.80}Co_{0.15}Al_{0.05}O₂ (NCA811) are preferable in terms of the high nickel content.

Examples of the negative electrode active material include carbon materials, silicon materials, metal oxides, and lithium alloys.

The pH of the active material is not particularly limited, but is, for example, 8.5 or greater and 12.0 or less in the case of the positive electrode active material. The pH of the active material refers to the pH of water when extraction is carried out at ordinary temperature (25°C) by an extraction method defined by JIS K 5101-16-2. Specifically, the pH value is obtained by placing an active material in ultrapure water of an amount 50 times the weight of the active material, stirring the mixture with a magnetic stirrer at a rotational speed of 600 rpm for 10 minutes, and measuring the pH of the supernatant using a pH meter MODEL: F-21 available from Horiba, Ltd.

The content of the active material in the electrode mixture is appropriately selected according to details such as the application of the electrode mixture, and the content is preferably 40 mass% or greater and 99.7 mass% or less in relation to the total amount of the active material, the conductive additive, and the solids content derived from the binder. When the content of the active material is in the range described above, for example, a more sufficient charge/discharge capacity can be achieved, and the battery performance is more likely to be improved.

### 2-2. Conductive Additive

The conductive additive is not particularly limited as long as it is a compound that can further increase electrical conductivity between the active materials or between the active materials and the current collector. Examples of the conductive additive include acetylene black, Ketjenblack, carbon black, graphite powder, graphene, carbon nanofibers, carbon nanotubes, and carbon fibers.

The content of the conductive additive in the electrode mixture is appropriately selected according to details such as the type of conductive additive. From the viewpoint of further improving electrical conductivity and the dispersibility of the conductive additive, the content of the conductive additive is preferably 0.1 mass% or greater and 15 mass% or less, more preferably 0.1 mass% or greater and 7 mass% or less, and even more preferably 0.1 mass% or greater and 5 mass% or less, in relation to the total amount of the active material, the conductive additive, and the solids content derived from the binder.

### 2-3. Binder

Even when the above-described binder is mixed with the above-described active material, and particularly with a positive electrode active material containing a relatively large amount of Ni, gelling does not easily occur while adhesiveness of an electrode mixture to a current collector.

The content of the binder is not particularly limited, and from the viewpoints of battery performance and adhesiveness, the binder content is preferably 0.2 parts by mass or greater and 15 parts by mass or less, more preferably 0.5 parts by mass or greater and 10 parts by mass or less, and even more preferably 0.5 parts by mass or greater and 4 parts by mass or less, per 100 parts by mass of the active material.

### 2-4. Other Components

The electrode mixture may further contain, for example, a solvent different from the non-aqueous solvent contained in the binder described above. The solvent can be selected from the above-described non-aqueous solvents that can be contained in the binder.

The total amount of the solvent (including the amount of the non-aqueous solvent in the binder) in the electrode mixture is not particularly limited but typically is preferably 20 parts by mass or greater and 150 parts by mass or less per 100 parts by mass of the active material described above.

The electrode mixture may further contain a dispersant, an adhesion aid, a thickener, and/or the like. Known compounds can be used as these other components. The amount of these other components is not particularly limited as long as the object and effects of the present invention are not impaired, but the amount thereof is preferably 15 mass% or less per the total amount of the binder-derived solids content and the active material.

Moreover, the electrode mixture may further contain an additive, such as a phosphorus compound, a sulfur compound, an organic acid, or a nitrogen compound such as an amine compound and an ammonium compound; an organic ester and various silane-based, titanium-based, and aluminum-based coupling agents; and resins such as a vinylidene fluoride polymer other than the vinylidene fluoride polymer described above, polytetrafluoroethylene (PTFE), styrene-butadiene rubber (SBR), and polyacrylonitrile (PAN). These additives are not particularly limited as long as the object and effects of the present invention are not impaired, and the amount is preferably 15 mass% or less in relation to the total amount of the binder-derived solids content and the positive electrode active material.

The viscosity of the electrode mixture is not particularly limited as long as the viscosity can better suppress dripping, uneven application, and delays in drying after application when the electrode mixture is applied to form an electrode mixture layer, and the workability and coatability of the electrode mixture during production of the electrode mixture layer are good. Typically, the viscosity (slurry viscosity) measured at 20°C at a rotational speed of 12 rpm using a B-type viscometer is preferably 100 mPa·s or greater and 100000 mPa·s or less, more preferably 1000 mPa·s or greater and 80000 mPa·s or less, and particularly preferably 2000 mPa·s or greater and 70000 mPa·s or less. The viscosity (slurry viscosity) of the electrode mixture in the present description is a value measured at 2 minutes after start of the rotation of the B-type rotational viscometer.

The electrode mixture may be prepared by mixing all the components all at once or may be prepared by first mixing some of the components and then mixing the remaining components.

The above-described binder, and the electrode mixture and electrode can be used as an electrode and preferably as a positive electrode, of a non-aqueous electrolyte secondary battery.

### 3. Electrode

The electrode may be any electrode that includes an electrode mixture layer containing the electrode mixture described above. In the present embodiment, the electrode includes a current collector and an electrode mixture layer disposed on the current collector.

### 3-1. Current Collector

A current collector is a terminal for extracting electricity. The current collector is not particularly limited, and a metal foil or metal mesh of aluminum, copper, iron, stainless steel, steel, nickel, titanium, or the like can be used. Among these, aluminum foil is preferred as the current collector for the positive electrode.

### 3-2. Electrode Mixture Layer

The electrode mixture layer is a layer formed by applying, onto a current collector, a composition (for example, the electrode mixture described above) containing an active material, a conductive additive, and the above-described binder and drying the composition. The electrode mixture layer may be disposed on only one surface of the current collector or may be disposed on both surfaces.

The electrode mixture layer contains at least an active material, a conductive additive, and solids content (vinylidene fluoride polymer) derived from the binder, and optionally further contains various additives such as a dispersant, an adhesion aid, and a thickener. These additives may be the same as those described for the electrode mixture.

The thickness of the electrode mixture layer is not particularly limited, but in one example, the thickness thereof is preferably 1 µm or greater and 1000 µm or less. In addition, the areal weight of the electrode mixture layer formed on one surface of the current collector is not particularly limited, but in one example, the areal weight thereof is preferably 50 g/m² or greater and 1000 g/m² or less, and more preferably 100 g/m² or greater and 500 g/m² or less.

The electrode mixture layer can be formed by applying the electrode mixture described above onto the current collector and drying the electrode mixture.

The method for applying the electrode mixture is not particularly limited, and a doctor blade method, a reverse roll method, a comma bar method, a gravure method, an air knife method, a die coating method, a dip coating method, or the like can be employed.

After the application of the electrode mixture, the electrode mixture is heated at any temperature to dry the non-aqueous solvent. In one example, a drying temperature is preferably 60°C or higher and 500°C or lower, and more preferably 80°C or higher and 200°C or lower. The heating may be performed multiple times at different temperatures. The solvent in the mixture may be dried under atmospheric pressure, increased pressure, or reduced pressure. After drying, heat treatment may be further performed.

After the application and drying of the electrode mixture, a pressing treatment may be further carried out. Carrying out the pressing treatment can improve the electrode density. In one example, a pressing pressure is preferably 1 kPa or greater and 10 GPa or less.

### 4. Non-Aqueous Electrolyte Secondary Battery

A non-aqueous electrolyte secondary battery according to the present embodiment includes the electrode described above. In the present embodiment, the non-aqueous electrolyte secondary battery includes the above-described electrode as a positive electrode. Examples of the non-aqueous electrolyte secondary battery include a lithium-ion secondary battery.

In the above-described embodiment, an example in which a vinylidene fluoride polymer was used as a binder for a non-aqueous electrolyte secondary battery was presented, but the present invention is not limited thereto, and the vinylidene fluoride polymer may be used as a binder for other secondary batteries, such as an all-solid-state battery, for example.

### EXAMPLES

Hereinafter, the present invention will be described further in detail with reference to examples, but the present invention is not limited to these examples.

### 1. Preparation of Vinylidene Fluoride Polymer

### Preparation of Vinylidene Fluoride Polymer 1 (VDF/SA)

An autoclave having an internal volume of 2 liters was charged with 1213 g of ion-exchanged water, 27.6 g of a 1.45 mass% aqueous solution of SM-100 (available from Shin-Etsu Chemical Co., Ltd.), 2.2 g of a 50 mass% diisopropyl peroxydicarbonate-HFE-347pc-f solution, 400 g of vinylidene fluoride, and 4 g of a compound (SA, a compound containing a sulfonyl group) represented by the following formula. The mixture was then heated to 45°C and reacted. The obtained polymer slurry was dehydrated and dried to obtain a vinylidene fluoride polymer 1 (VDF/SA = 100/0.34 molar ratio, 99/1 mass ratio).

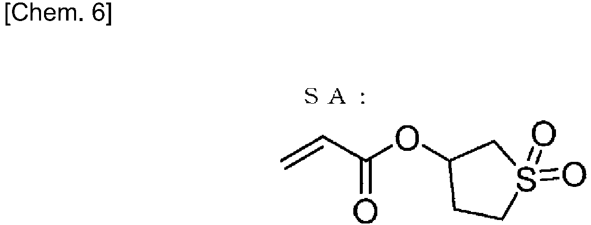

### Preparation of Vinylidene Fluoride Polymer 2 (VDF/MSEA)

An autoclave having an internal volume of 2 liters was charged with 1213 g of ion-exchanged water, 27.6 g of a 1.45 mass% aqueous solution of SM-100 (available from Shin-Etsu Chemical Co., Ltd.), 2.4 g of a 50 mass% diisopropyl peroxydicarbonate-HFE-347pc-f solution, 400 g of vinylidene fluoride, and 4 g of a compound (MSEA, a compound containing a sulfonyl group) represented by the following formula. The mixture was then heated to 45°C and reacted. The obtained polymer slurry was dehydrated and dried to obtain a vinylidene fluoride polymer 3 (VDF/MSEA = 100/0.36 molar ratio, 99/1 mass ratio).

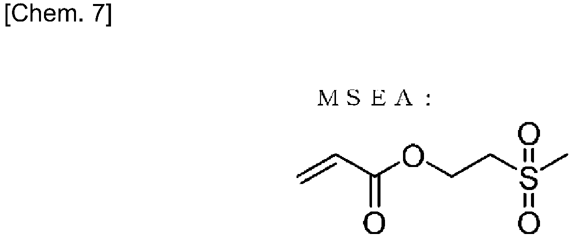

### Preparation of Vinylidene Fluoride Polymer 3 (VDF/SA)

A vinylidene fluoride polymer 3 (VDF/SA = 100/0.24 molar ratio, 99.3/0.7 mass ratio) was obtained in the same manner as in the preparation of the vinylidene fluoride polymer 1 with the exception that the blending amount of SA was changed.

### Preparation of Vinylidene Fluoride Polymer 4 (VDF/APS)

An autoclave having an internal volume of 2 liters was charged with 1096 g of ion-exchanged water, 0.2 g of Metolose 90SH-100 (available from Shin-Etsu Chemical Co., Ltd.), 2.2 g of a 50 wt.% diisopropyl peroxydicarbonate-HFE-347pc-f solution, 426 g of vinylidene fluoride, and an initial addition amount of 0.2 g of acryloyloxypropyl succinate (APS), and the temperature was raised to 26°C over a period of 1 hour. Subsequently, a 6 wt.% acryloyloxypropyl succinate aqueous solution was gradually added at a rate of 0.5 g/minute while the temperature was maintained at 26°C. The obtained polymer slurry was dehydrated and dried to obtain a vinylidene fluoride polymer 4 (VDF/APS = 100/0.28 molar ratio, 99/1 mass ratio) containing a polar group. A total of 4.0 g of acryloyloxy propyl succinate was added, including the amount added initially.

### Vinylidene Fluoride Polymer 5 (PVDF)

Polyvinylidene fluoride (KF #7300" available from Kureha Corporation) was used.

### Preparation of Vinylidene Fluoride Polymer 6 (VDF/CTFE)

An autoclave having an internal volume of 2 liters was charged with 1036 g of ion-exchanged water, 0.4 g of Metolose SM-100 (available from Shin-Etsu Chemical Co., Ltd.), 8 g of a 50 wt.% diisopropyl peroxydicarbonate-HFE-347pc-f solution, 6.0 g of ethyl acetate, 20 g of a 2 wt.% acidic aqueous solution of sodium pyrophosphate, 20 g of a 2 wt.% sodium pyrophosphate aqueous solution, 360 g of vinylidene fluoride, and 40 g of chlorotrifluoroethylene, and the mixture was heated to 28°C. The obtained polymer slurry was dehydrated and dried to obtain a vinylidene fluoride polymer 6 (VDF/CTFE = 100/2.3 molar ratio, 96/4 mass ratio).

### Measurement of Inherent Viscosity

The inherent viscosity of each vinylidene fluoride polymer was measured as follows.

First, 80 mg of the vinylidene fluoride polymer was dissolved in 20 mL of N,N-dimethylformamide, and the viscosity was measured by using an Ubbelohde viscometer in a 30°C thermostatic bath. The inherent viscosity (ηᵢ) of the vinylidene fluoride polymer was then calculated from the obtained value using the following equation. ${η}_{i} = \left(1/C\right) \cdot ln \left(η/{η}_{0}\right)$

In the equation, η is the viscosity of the solution, η₀ is the viscosity of the solvent N,N-dimethylformamide alone, and C is the concentration of the vinylidene fluoride polymer in the solution, that is, 0.4 g/dL.

**[Table 1]**

| Type | Vinylidene Fluoride Polymer | | ηᵢ (dL/g) |
|---|---|---|---|
| | Copolymerization Ratio | | |
| | Molar ratio | Mass ratio | |
| 1 | VDF/SA = 100/0.34 | VDF/SA = 99/1 | 2.8 |
| 2 | VDF/MSEA = 100/0.36 | VDF/MSEA = 99/1 | 2.4 |
| 3 | VDF/SA = 100/0.24 | VDF/SA = 99.3/0.7 | 2.8 |
| 4 | VDF/APS = 100/0.28 | VDF/APS = 99/1 | 2.5 |
| 5 | VDF = 100 | VDF = 100 | 3.1 |
| 6 | VDF/CTFE = 100/2.3 | VDF/CTFE = 96/4 | 2.1 |

### 2. Preparation and Evaluation (1) of Electrode Mixture and Electrode

### Example 1

### Binder Preparation

The vinylidene fluoride polymer 1 was dissolved in N-methyl-2-pyrrolidone (hereinafter, also referred to as "NMP") having a water content of 300 ppm by mass or less to thereby prepare a 6 mass% vinylidene fluoride polymer solution as a binder.

### Electrode Mixture Preparation

In an environment with a dew point of -30°C or lower, NCA811 (Li_{1.00}Ni_{0.80}Co_{0.15}Al_{0.05}O₂, mean particle size: 13 µm, specific surface area: 0.2 m²/g, pH: 11.5) as an active material, carbon black (SP: SuperP (trade name) available from Timcal Japan KK, mean particle size: 40 nm, specific surface area: 60 m²/g) as a conductive additive, and NMP having a water content of 300 ppm by mass or less were added to the above-described vinylidene fluoride polymer solution, and the mixture was kneaded using the Awatori Rentaro mixer available from Thinky Corporation. Specifically, the vinylidene fluoride polymer solution and the carbon black were subjected to a first mixing for one minute at 2000 rpm, after which the NCA811 was further added thereto, and the mixture was subjected to a second mixing at 2000 rpm for 2 minutes. To this mixture, NMP having a water content of 300 ppm by mass or less was further added to adjust the solids content concentration to 75 mass%, and the mixture was subjected to a third mixing at 2000 rpm for 3 minutes to obtain an electrode mixture. The mass ratio of the NCA811, the carbon black, and the vinylidene fluoride polymer 1 was 100:1.5:1.5. The pH of the active material was a value measured by the above-described measurement method.

### Electrode Production

The obtained electrode mixture was applied with a bar coater onto a 15 µm thick aluminum foil serving as a current collector, and the coated current collector was then placed in a thermostat and subjected to a primary drying at 110°C for 30 minutes in a nitrogen atmosphere. Then, secondary drying was performed at 130°C for 2 hours under a nitrogen atmosphere to produce an electrode (electrode peeling measurement sample) having an areal weight of about 250 g/m².

### Examples 2 and 3 and Comparative Examples 1 to 3

Electrode mixtures and electrodes were prepared in the same manner as in Example 1 with the exception that the vinylidene fluoride polymer 1 was changed to the vinylidene fluoride polymers described in Table 1.

### Evaluation

### (1) Electrode Mixture Storage Test 1

The slurry of the electrode mixture prepared above was stored at 25°C and a dew point of -30°C or lower in a nitrogen atmosphere for a predetermined time (24 hours, 96 hours, 168 hours, or 264 hours). The viscosity of the slurry before and after storage was measured using an E-type viscometer at 25°C and a shear rate of 2 s⁻¹.

The viscosity was measured by placing the slurry into a measuring device, waiting for 60 seconds, and then rotating the rotor. In addition, a value obtained 300 seconds after the startup of rotation of the rotor was used as the slurry viscosity.

The viscosity of the slurry before storage (viscosity of the slurry at a storage time of 0 h) and the viscosity of the slurry after storage (viscosity of the slurry after a storage time of 264 h) were applied to the following equation to calculate the viscosity ratio of the slurry. $Viscosity ratio \left(%\right) = \left(slurry viscosity after storage\right) / \left(\begin{matrix}slurry viscosity before \\ storage\end{matrix}\right) \times 100$

### (2) Electrode Peel Strength Test

Each prepared electrode was cut to a length of 100 mm and a width of 20 mm. Then, a 90° peel test was conducted at a head speed of 10 mm/min in accordance with JIS F6854-1 using a tensile tester (ORIENTE CHSIA-1150 available from UNIVERSAL TESTING MACHINE) to measure the peel strength.

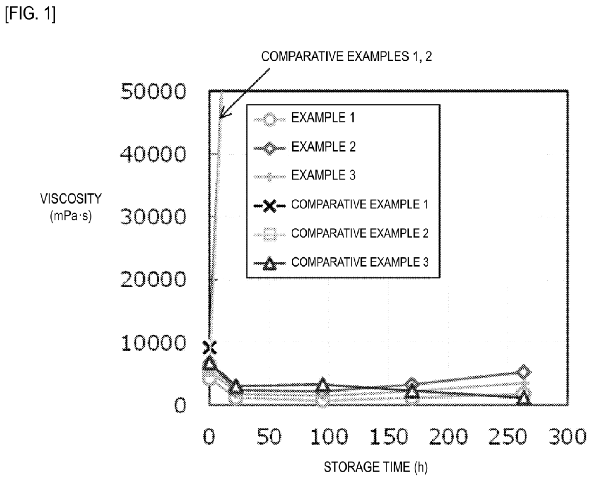

The evaluation results for Examples 1 to 3 and Comparative Examples 1 to 3 are presented in Table 2. Moreover, a graph indicating the change in viscosity over time is presented in FIG. 1.

**[Table 2]**

| | Vinylidene Fluoride Polymer | | Viscosity (mPa·s) | | | | | Viscosity Ratio (%) | Peel Strength (gf/mm) |
|---|---|---|---|---|---|---|---|---|---|
| | Type | Copolymerization Ratio | 0 h | 24 h | 96 h | 168 h | 264 h | | |
| | | Molar ratio | | | | | | | |
| Example 1 | 1 | VDF/SA = 100/0.34 | 4253 | 1126 | 751 | 1126 | 1751 | 41 | 5.5 |
| Example 2 | 2 | VDF/MSEA = 100/0.36 | 6630 | 2377 | 2127 | 3253 | 5254 | 79 | 6.0 |
| Example 3 | 3 | VDF/SA = 100/0.24 | 5432 | 1746 | 1440 | 2175 | 3498 | 64 | 6.0 |
| Comparative Example 1 | 4 | VDF/APS = 100/0.28 | 9132 | 1.E+05 | | | | Unmeasurable | 6.9 |
| Comparative Example 2 | 5 | VDF = 100 | 5630 | 1.E + 05 | | | | Unmeasurable | 6.4 |
| Comparative Example 3 | 6 | VDF/CTFE = 100/2.3 | 6755 | 3002 | 3253 | 2252 | 1126 | 17 | 1.6 |

As presented in Table 2, the slurry of Comparative Example 3 containing the vinylidene fluoride polymer 6, which contained structural units derived from CTFE, exhibited minimal thickening over time, and thus exhibited an effect of suppressing thickening. However, it is clear that the peel strength of the slurry of Comparative Example 3 was lower than that of Comparative Example 2 containing the vinylidene fluoride polymer 5 (homopolymer), and thus the adhesiveness was reduced. Meanwhile, the slurry of Comparative Example 1 containing the vinylidene fluoride polymer 4, which contained structural units derived from APS, was found to significantly thicken over time.

In contrast, the slurries of Examples 1 to 3, which each contained a vinylidene fluoride polymer containing structural units derived from a sulfonyl group-containing compound (SA, MSEA), exhibited a high level of adhesiveness and an effect of suppressing thickening.

### 3. Electrode Mixture Preparation and Evaluation (2)

### Comparative Examples 4 to 7

### Binder Preparation

The vinylidene fluoride polymer 5 (#7300) was dissolved in NMP with a water content of 300 ppm by mass or less, and a 6 mass% vinylidene fluoride polymer solution was thereby prepared.

### Electrode Mixture Preparation

In an environment with a dew point of -30°C or lower, NCA811 (Li_{1.00}Ni_{0.80}Co_{0.15}Al_{0.05}O₂, mean particle size: 13 µm, specific surface area: 0.2 m²/g, pH: 11.5) as an active material, carbon black (SP: SuperP (trade name) available from Timcal Japan KK, mean particle size: 40 nm, specific surface area: 60 m²/g) as a conductive additive, and NMP having a water content of 300 ppm by mass or less were added to the above-described vinylidene fluoride polymer solution, and the mixture was kneaded using a Thinky Awatori Rentaro mixer available from Thinky Corporation. Specifically, the active material and the carbon black were subjected to a first mixing for one minute at 800 rpm, after which the vinylidene fluoride polymer solution was further added thereto, and the mixture was subjected to a second mixing at 2000 rpm for 2.5 minutes. An NMP solution of the additives was further added to the mixture to adjust the solids content concentration to 75 mass%, the resulting mixture was subjected to a third mixing at 2000 rpm for 3 minutes, and an electrode mixture containing the NCA811, the SP, the binder, and the additives (at a mass ratio of NCA811/SP/binder/additives = 100/2/2) and the additives presented in Table 2 was obtained. The pH of the active material was a value measured by the above-described measurement method.

### Example 4

### Binder Preparation

A vinylidene fluoride polymer solution was prepared in the same manner as in Comparative Example 4 with the exception that the vinylidene fluoride polymer 5 was changed to the vinylidene fluoride polymer 1.

### Electrode Mixture Preparation

An electrode mixture was prepared in the same manner as in Comparative Example 4 with the exception that the obtained vinylidene fluoride polymer solution was used and no additives were added.

### Evaluation

### Electrode Mixture Storage Test 2

The slurry of the electrode mixture prepared above was stored at 40°C and a dew point of -30°C or lower in a nitrogen atmosphere for a predetermined time (3 hours, 6 hours, 24 hours, 48 hours, 72 hours, 96 hours, or 168 hours). The viscosity of the slurry before and after storage was measured using an E-type viscometer at 25°C and a shear rate of 2 s⁻¹.

The viscosity was measured by placing the slurry into a measuring device, waiting for 60 seconds, and then rotating the rotor. In addition, a value obtained after 300 seconds from the start of rotation of the rotor was used as the slurry viscosity.

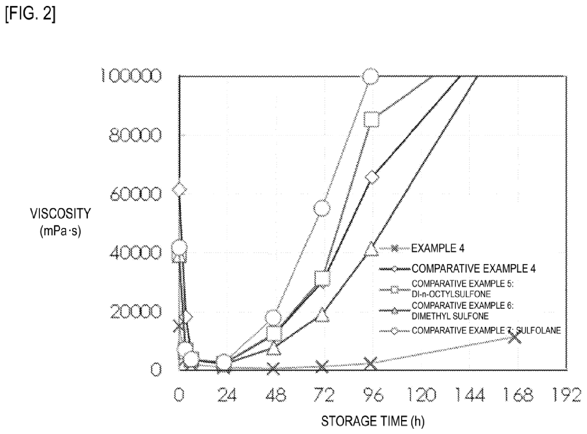

The evaluation results for Example 4 and Comparative Examples 4 to 7 are presented in Table 3. Moreover, a graph indicating the change in viscosity over time is presented in FIG. 2.

**[Table 3]**

| | Vinylidene Fluoride Polymer | | Additive | Viscosity (mPa·s) | | | | | | | |
|---|---|---|---|---|---|---|---|---|---|---|---|
| | Type | Copolymerization Ratio | Type | 0 h | 3 h | 6 h | 24 h | 48 h | 72 h | 96 h | 168 h |
| | | Molar ratio | | | | | | | | | |
| Example 4 | 1 | VDF/SA = 100/0.34 | - | 15262 | 3753 | 2002 | 1001 | 626 | 1251 | 2377 | 11384 |
| Comparative Example 4 | 5 | VDF = 100 | - | 61549 | 18265 | 3628 | 2377 | 12260 | 30399 | 65678 | 122098 |
| Comparative Example 5 | 5 | VDF = 100 | di-n-octylsulfone | 40032 | 7006 | 3753 | 2377 | 12510 | 31400 | 85443 | 119971 |
| Comparative Example 6 | 5 | VDF = 100 | dimethyl sulfone | 39281 | 6380 | 3628 | 2127 | 7756 | 19140 | 41658 | 121222 |
| Comparative Example 7 | 5 | VDF = 100 | sulfolane | 41909 | 7131 | 3753 | 2752 | 17889 | 55169 | 100000 | 120847 |

As presented in Table 3, it is clear that the electrode mixtures of Comparative Examples 4 to 7, in which a sulfonyl group-containing compound was added to a binder of a vinylidene fluoride homopolymer, exhibited significant thickening over time.

In contrast, it is clear that thickening over time was suppressed with the electrode mixture of Example 4, in which a binder of a vinylidene fluoride polymer containing structural units derived from a sulfonyl group-containing compound (SA, MSEA).

From these results, it is understood that in order to suppress the thickening of the electrode mixture, the mere presence of a sulfonyl group (-SO₂-) in the slurry is insufficient, and a polymer having structural units containing a sulfonyl group must be contained in the slurry.

The present application claims the rights of priority based on the Japanese Patent Application No. 2024-002573 filed on January 11, 2024. The contents described in the specification of the foregoing application are all incorporated in the specification of the present application by reference.

### INDUSTRIAL APPLICABILITY

Even when mixed, in particular, with a positive electrode active material containing a large amount of nickel, the binder of the present invention can suppress the thickening of a slurry while maintaining adhesiveness of an electrode mixture to a current collector. Therefore, the binder and the electrode mixture and electrode containing the binder are very useful for manufacturing non-aqueous electrolyte secondary batteries such as lithium-ion secondary batteries.

## Claims

1. A binder for a secondary battery, the binder comprising a vinylidene fluoride polymer comprising structural units derived from vinylidene fluoride and structural units derived from a sulfonyl group-containing compound,
wherein in the vinylidene fluoride polymer,
the content of the structural units derived from a sulfonyl group-containing compound is 0.15 mol% or greater and 1 mol% or less relative to the structural units derived from vinylidene fluoride.

2. The binder for a secondary battery according to claim 1, wherein
the sulfonyl group-containing compound is a compound represented by Formula (1) set forth below: 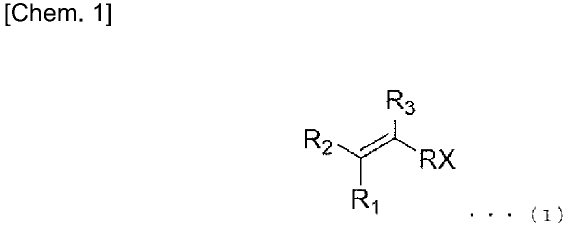
where in Formula (1),
R₁, R₂, and R₃ each independently represent a hydrogen atom, a chlorine atom, a fluorine atom, an alkyl group having from 1 to 6 carbon atoms, or a fluorine-substituted alkyl group having from 1 to 6 carbon atoms,
RX is an atomic group comprising -SO₂-Ra or -SO₂-F, and
Ra is an atomic group comprising at least one carbon atom.

3. The binder for a secondary battery according to claim 1, wherein
the sulfonyl group-containing compound further comprises an ester bond.

4. The binder for a secondary battery according to claim 1, wherein
the sulfonyl group-containing compound is a compound represented by Formula (2) set forth below: 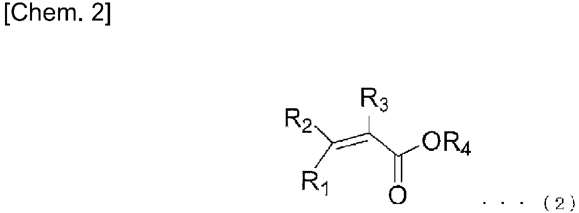
where in Formula (2),
R₁, R₂, and R₃ each independently represent a hydrogen atom, a chlorine atom, a fluorine atom, an alkyl group having from 1 to 6 carbon atoms, or a fluorine-substituted alkyl group having from 1 to 6 carbon atoms,
R₄ is an atomic group comprising -SO₂-Ra or an atomic group comprising -SO₂-F, and
Ra is an atomic group comprising at least one carbon atom.

5. The binder for a secondary battery according to claim 4, wherein
R₄ is a group comprising -(CH₂)n-SO₂-Ra,
Ra is an alkyl group,
the alkyl group and a carbon atom of -(CH₂)n- are optionally bonded to form a ring, and
n is an integer of 1 or greater.

6. The binder for a secondary battery according to claim 1, wherein
when a slurry is prepared under conditions set forth below, a viscosity ratio of the slurry measured under the conditions is 150% or less:
1) mix the binder for a secondary battery with Li_{1.00}Ni_{0.80}Co_{0.15}Al_{0.05}O₂ (mean particle size: 13 µm, specific surface area: 0.2 m²/g, pH: 11.5) as an active material, carbon black (mean particle size: 40 nm, specific surface area: 60 m²/g), and N-methyl-2-pyrrolidone having a water content of 300 ppm by mass or less to prepare a slurry having a mass ratio of the active material, the carbon black, and the vinylidene fluoride polymer of 100:1.5:1.5 and a solids content concentration of 75 mass%;
2) measure a viscosity of the slurry before storage using an E-type viscometer at 25°C and a shear rate of 2 s⁻¹;
3) store the slurry at 25°C under a nitrogen atmosphere for 264 hours;
4) measure the viscosity of the slurry after storage using an E-type viscometer at 25°C and a shear rate of 2 s⁻¹; and
5) calculate a viscosity ratio of the slurry based on an equation set forth below: $viscosity ratio \left(%\right) = \left(slurry viscosity after storage\right) / \left(\begin{matrix}slurry viscosity before \\ storage\end{matrix}\right) \times 100$
provided that 1) to 5) are carried out in an environment having a dew point of -30°C or lower.

7. An electrode mixture, comprising an active material, a conductive additive, and the binder for a non-aqueous electrolyte secondary battery described in any one of claims 1 to 6.

8. The electrode mixture according to claim 7, wherein
the active material is a positive electrode active material.

9. The electrode mixture according to claim 8, wherein
the positive electrode active material comprises a compound represented by Formula (3) set forth below:
LiMxO₂ ··· (3)
where in Formula (3), M represents at least one type of metal element including Ni, and when a total of the metal elements represented by M is defined as 100 mol%, a content proportion of Ni is 55 mol% or greater, and 0.5 ≤ x ≤ 1.5 holds true.

10. An electrode, comprising:
a current collector; and
an electrode mixture layer retained on the current collector, the electrode mixture layer comprising the electrode mixture described in any one of claims 7 to 9.

11. A non-aqueous electrolyte secondary battery, comprising the electrode described in claim 10.
